# EUROPÄISCHE PATENTANMELDUNG

(11) **EP 4 806 727 A1**
(43) Veröffentlichungstag der Anmeldung: **16.09.2026**
(21) Anmeldenummer: 26155775.5
(22) Anmeldetag: 02.02.2026
(51) Int. Cl.: B60R 9/045, B60R 9/048, B60R 9/10

(54) **TRAGEINHEIT FÜR EINEN FAHRRADTRÄGER**

(30) Priorität: 13.03.2025 PL 45146825
(71) Anmelder: ATERA GmbH, 88299 Leutkirch im Allgäu (DE)
(72) Erfinder: Sang, Johannes, 55278 Undenheim (DE); Sarlej, Kamil, 58-150 Strzegom (PL)
(74) Vertreter: Patentanwälte Ruff, Wilhelm, Beier, Dauster & Partner mbB

(57) **Zusammenfassung**

Die Erfindung betrifft eine Trageinheit (10) für einen Fahrradträger (1), aufweisend eine Haltevorrichtung (20) zum Halten eines an einer Fahrradgabel (G) montierten Montageabschnitts (M), insbesondere einer Steckachse, wobei die Haltevorrichtung ein feststehendes Halteelement (21), ein bewegliches Halteelement (22) und eine Halteaussparung (23) aufweist, die zwischen dem feststehenden Halteelement und dem beweglichen Halteelement ausgebildet ist, wobei das bewegliche Halteelement relativ zu dem feststehenden Halteelement beweglich ist zwischen einer Öffnungsstellung, in der die Halteaussparung zur Aufnahme des Montageabschnitts geöffnet ist, und einer Haltestellung, in der die Halteaussparung zum Halten des Montageabschnitts geschlossen ist, eine Spannvorrichtung (30) mit einem Kniehebelmechanismus (40), der mit dem beweglichen Halteelement wirkverbunden, in einer Bewegungsebene (E) beweglich und zum Bewegen des beweglichen Halteelements zwischen der Öffnungsstellung und der Haltestellung eingerichtet ist, wobei der Kniehebelmechanismus in der Haltestellung überstreckt ist zum Verriegeln des beweglichen Halteelements, wobei die Spannvorrichtung eine Ausgleichseinrichtung (50) aufweist, mittels derer der Kniehebelmechanismus relativ zu dem feststehenden Halteelement in der Bewegungsebene translatorisch beweglich elastisch abgestützt ist, wobei die elastische Abstützung einen Größenausgleich bewirkt, der ein Verriegeln des beweglichen Halteelements beim Halten unterschiedlich großer Montageabschnitte erlaubt, wobei die Spannvorrichtung eine Arretiereinrichtung (60) aufweist, die dazu eingerichtet ist, die Ausgleichseinrichtung und damit die elastische Abstützung des Kniehebelmechanismus bei Erreichen der Haltestellung lösbar zu arretieren.

## Beschreibung

Die Erfindung betrifft eine Trageinheit für einen Fahrradträger gemäß den oberbegrifflichen Merkmalen des Anspruchs 1.

Eine derartige Trageinheit ist aus der EP 4 491 461 A1 bekannt und weist eine Haltevorrichtung und eine Spannvorrichtung mit einem Kniehebelmechanismus und einer Ausgleichseinrichtung auf. Die Haltevorrichtung weist ein feststehendes Halteelement, ein bewegliches Halteelement und eine Halteaussparung auf. Die Halteaussparung ist zwischen dem feststehenden Halteelement und dem beweglichen Halteelement ausgebildet und dient der Aufnahme eines an einer Fahrradgabel montierten Montageabschnitts, der im Speziellen als Steckachse ausgebildet sein kann. Das bewegliche Halteelement ist relativ zu dem feststehenden Halteelement zwischen einer Öffnungsstellung und einer Haltestellung beweglich. In der Öffnungsstellung ist die Halteaussparung zur Aufnahme des Montageabschnitts geöffnet. In der Haltestellung ist die Halteaussparung zum Halten des Montageabschnitts geschlossen. Der Kniehebelmechanismus ist zum Bewegen des beweglichen Halteelements zwischen der Öffnungsstellung und der Haltestellung eingerichtet. In der Haltestellung ist der Kniehebelmechanismus überstreckt, um das bewegliche Halteelement zu verriegeln. Die Ausgleichseinrichtung dient einer elastischen Abstützung des Kniehebelmechanismus in der Bewegungsebene. Durch diese elastische Abstützung wird ein Größenausgleich bewirkt, der ein Verriegeln des beweglichen Halteelements beim Halten unterschiedlich großer Montageabschnitte erlaubt. Im Speziellen können hierdurch unterschiedliche Steckachsen mit unterschiedlichen Durchmessern gehalten werden.

Aufgabe der Erfindung ist es, eine Trageinheit der eingangs genannten Art bereitzustellen, die Vorteile gegenüber dem Stand der Technik bietet. Im Speziellen soll eine besonders zuverlässige Verriegelung in der Haltestellung erreicht werden.

Diese Aufgabe wird dadurch gelöst, dass die Spannvorrichtung eine Arretiereinrichtung aufweist, die dazu eingerichtet ist, die Ausgleichseinrichtung und damit die elastische Abstützung des Kniehebelmechanismus bei Erreichen der Haltestellung lösbar zu arretieren. Die Erfindung geht von der Erkenntnis aus, dass die elastische Abstützung unter gewissen Umständen ein ungewolltes Lösen der Verriegelung und damit ein ungewolltes Öffnen der Haltevorrichtung begünstigen kann. Dies beispielsweise dann, wenn die Trageinheit mitsamt dem Fahrrad größeren Beschleunigungen und damit Trägheitskräften ausgesetzt ist, was beispielsweise bei einem Unfall eines mit dem Fahrradträger ausgestatteten Kraftfahrzeugs der Fall sein kann. Die Arretiereinrichtung wirkt dem entgegen, indem die Ausgleichseinrichtung und damit die elastische Abstützung des Kniehebelmechanismus in der Haltestellung lösbar arretiert. Im arretierten Zustand ist die translatorisch beweglich elastische Abstützung des Kniehebelmechanismus blockiert. Mit anderen Worten: Die Ausgleichseinrichtung ist außer Funktion gesetzt. Die Arretiereinrichtung kann jede für den vorliegenden Zweck geeignete Gestaltung aufweisen. Bei einer Ausgestaltung wirkt die Arretiereinrichtung in der Haltestellung formschlüssig. Bei einer weiteren Ausgestaltung wirkt die Arretiereinrichtung in der Haltestellung kraftschlüssig. Dabei ist es wichtig zu erwähnen, dass die Arretiereinrichtung nicht etwa einer Arretierung der eigentlichen Kinematik des Kniehebelmechanismus in der Bewegungsebene dient. Für diesen Zweck kann bei Ausgestaltungen eine gesonderte Einrichtung vorhanden sein, insbesondere eine Fixiereinrichtung. Das bewegliche Halteelement ist bei unterschiedlichen Ausgestaltungen auf unterschiedliche Art zwischen der Öffnungsstellung und der Haltestellung beweglich. Bei einer Ausgestaltung ist das bewegliche Halteelement translatorisch beweglich. Bei einer weiteren Ausgestaltung ist das bewegliche Halteelement alternativ oder zusätzlich rotatorisch und/oder schwenkbeweglich. Bei einer Ausgestaltung ist das bewegliche Halteelement in der Bewegungsebene des Kniehebelmechanismus beweglich. Bei einer weiteren Ausgestaltung ist das bewegliche Halteelement in einer quer, vorzugsweise orthogonal, zu der Bewegungsebene orientierten Ebene beweglich. Zum Verriegeln des beweglichen Halteelements in der Haltestellung ist der Kniehebelmechanismus überstreckt, d. h. über einen Totpunkt hinausbewegt, ab welchem eine weitergehende Bewegung des Kniehebelmechanismus keine weitergehende Bewegung des beweglichen Halteelements in Richtung der Haltestellung verursacht. Die Ausgleichseinrichtung kann auf jede für den vorliegenden Zweck geeignete Weise gestaltet sein. Durch die Ausgleichseinrichtung wird eine elastische Ausgleichsbewegung des Kniehebelmechanismus ermöglicht. Diese Ausgleichsbewegung/elastische Abstützung ermöglicht den besagten Größenausgleich, wodurch auch bei Verwendung unterschiedlich großer Montageabschnitte eine funktionsgemäße Kinematik des Kniehebelmechanismus gewährleistet ist. Der Kniehebelmechanismus greift einends an dem beweglichen Halteelement an und ist andernends mittels der Ausgleichseinrichtung elastisch abgestützt. Bei einer bevorzugten Ausgestaltung weist die Ausgleichseinrichtung wenigstens eine Ausgleichsfeder auf, die als Zug- oder Druckfeder gestaltet sein kann. Alternativ oder zusätzlich kann die Ausgleichseinrichtung ein elastisch nachgiebiges Elastomerelement oder dergleichen aufweisen.

In Ausgestaltung der Erfindung weist die Arretiereinrichtung ein erstes Formschlusselement und ein zweites Formschlusselement auf. Das erste Formschlusselement ist relativ zu dem feststehenden Halteelement unbeweglich. Das zweite Formschlusselement ist mit dem Kniehebelmechanismus fest verbunden und gemeinsam mit diesem in der Bewegungsebene beweglich. Bei Erreichen der Haltestellung wirkt das zweite Formschlusselement mit dem ersten Formschlusselement in Richtung der elastischen Abstützung formschlüssig zusammen. Durch diesen Formschluss wird die Ausgleichseinrichtung und damit die elastische Abstützung des Kniehebelmechanismus lösbar arretiert. Der Formschluss wirkt in der Bewegungsebene und in Richtung der elastischen Abstützung. Der Formschluss und damit die Arretierung sind mittels einer Bewegung des Kniehebelmechanismus in Richtung der Öffnungsstellung des beweglichen Halteelements lösbar. Diese Ausgestaltung der Erfindung erlaubt eine besonders einfache Gestaltung der Arretiereinrichtung.

**In** weiterer Ausgestaltung der Erfindung weist das erste Formschlusselement eine Zahnstange auf und das zweite Formschlusselement weist einen Verzahnungsabschnitt auf. Die Zahnstange ist in der Bewegungsebene längserstreckt. Bei Erreichen der Haltestellung gelangt der Verzahnungsabschnitt in Zahneingriff mit der Zahnstange, wobei der Zahneingriff beim Halten unterschiedlich großer Montageabschnitte an unterschiedlichen Längspositionen der Zahnstange stattfindet. Dies ist eine besonders bevorzugte Ausgestaltung der Erfindung. Durch den Zahneingriff zwischen Zahnstange und Verzahnungsabschnitt kann eine funktionsgerechte Arretierung auch bei unterschiedlich großen Montageabschnitten erreicht werden, im Speziellen auch bei Steckachsen unterschiedlicher Durchmesser. Die Zahnstange und der Verzahnungsabschnitt weisen eine zueinander komplementäre Verzahnungsgeometrie auf. Vorzugsweise ist die Zahnstange in der Bewegungsebene gerade längserstreckt. Weiter vorzugsweise ist die Zahnstange in Richtung der elastischen Abstützung der Ausgleichseinrichtung gerade längserstreckt. Der Verzahnungsabschnitt weist wenigstens einen Zahn auf. Vorzugsweise weist der Verzahnungsabschnitt mehrere Zähne auf, da hierdurch eine verbesserte Kraftübertragung zwischen der Zahnstange und dem Verzahnungsabschnitt und damit eine besonders robuste Arretierung erreicht werden kann. Bei einer Ausgestaltung ist der Verzahnungsabschnitt als eine Art Zahnradsegment gestaltet. Bei einer weiteren Ausgestaltung ist der Verzahnungsabschnitt als weitere Zahnstange gestaltet. Die Zahnstange ist relativ zu dem feststehenden Halteelement unbeweglich. Der Verzahnungsabschnitt ist fest mit dem Kniehebelmechanismus verbunden und gemeinsam mit diesem in der Bewegungsebene beweglich.

**In** weiterer Ausgestaltung der Erfindung ist das bewegliche Halteelement relativ zu dem feststehenden Halteelement um eine erste Schwenkachse in der Bewegungsebene zwischen der Öffnungsstellung und der Haltestellung schwenkbeweglich an dem feststehenden Halteelement gelagert. Durch die Schwenkbeweglichkeit des beweglichen Halteelements in der Bewegungsebene des Kniehebelmechanismus kann ein nochmals vereinfachter Aufbau der Trageinheit erreicht werden. Die erste Schwenkachse ist orthogonal zu der Bewegungsebene des Kniehebelmechanismus. Bei einer Ausgestaltung ist das bewegliche Halteelement mittels des Kniehebelmechanismus um wenigstens 60°, bevorzugt wenigstens 80°, besonders bevorzugt um wenigstens 90°, um die erste Schwenkachse schwenkbeweglich. Hierdurch wird eine besonders weite Öffnung der Halteaussparung in der Öffnungsstellung erreicht, so dass der Montageabschnitt, insbesondere die Steckachse, ohne ein unbeabsichtigtes Anstoßen an den beiden Halteelementen in die Halteaussparung eingesetzt werden kann.

In weiterer Ausgestaltung der Erfindung weist der Kniehebelmechanismus einen Betätigungshebel und einen Stützhebel auf. Der Betätigungshebel ist relativ zu dem beweglichen Halteelement um eine zweite Schwenkachse in der Bewegungsebene schwenkbeweglich an dem beweglichen Halteelement gelagert. Der Stützhebel ist um eine dritte Schwenkachse relativ zu dem feststehenden Halteelement schwenkbeweglich mit dem feststehenden Halteelement verbunden. Der Betätigungshebel und der Stützhebel sind um eine vierte Schwenkachse relativ zueinander in der Bewegungsebene schwenkbeweglich aneinander gelagert. Diese Ausgestaltung der Erfindung erlaubt einen besonders einfachen Aufbau des Kniehebelmechanismus. Bei einer bevorzugten Ausgestaltung ist der Betätigungshebel vorzugsweise zur (unmittelbaren) manuellen Betätigung des Kniehebelmechanismus eingerichtet. Beispielsweise kann der Betätigungshebel hierfür einen Betätigungsabschnitt aufweisen, der zum manuellen Umgreifen durch einen Bediener eingerichtet ist. Bei einer weiteren Ausgestaltung ist der Betätigungshebel stattdessen mit einem weiteren zur (unmittelbaren) manuellen Betätigung eingerichteten Hebel des Kniehebelmechanismus verbunden. Vorzugsweise ist der Betätigungshebel unmittelbar an dem beweglichen Halteelement gelagert. Der Stützhebel ist einerseits um die vierte Schwenkachse schwenkbeweglich an dem Betätigungshebel gelagert (und umgekehrt) und andererseits um die dritte Schwenkachse relativ zu dem feststehenden Halteelement schwenkbeweglich mit dem feststehenden Halteelement verbunden. Die besagte Verbindung des Stützhebels mit dem feststehenden Halteelement kann mittelbar oder unmittelbar sein. Die zweite Schwenkachse, die dritte Schwenkachse und die vierte Schwenkachse sind parallel. Die zweite Schwenkachse, die dritte Schwenkachse und die vierte Schwenkachse sind orthogonal zu der Bewegungsebene.

In weiterer Ausgestaltung der Erfindung ist die dritte Schwenkachse mittels der Ausgleichseinrichtung relativ zu dem feststehenden Halteelement in der Bewegungsebene translatorisch beweglich elastisch abgestützt. Mit anderen Worten: Die Ausgleichseinrichtung greift bei dieser Ausgestaltung im Bereich der dritten Schwenkachse an dem Stützhebel an. Hierdurch ist der Stützhebel in der Bewegungsebene begrenzt translatorisch elastisch beweglich.

In weiterer Ausgestaltung der Erfindung wirkt die Arretiereinrichtung zwischen dem Betätigungshebel und dem feststehenden Halteelement. Bei dieser Ausgestaltung ist die Arretiereinrichtung folglich abschnittsweise und/oder teilweise an der Arretiereinrichtung und an dem Betätigungshebel angeordnet und/oder ausgebildet. Bei einer Ausgestaltung ist das erste Formschlusselement, im Speziellen die Zahnstange, mit dem feststehenden Halteelement verbunden und das zweite Formschlusselement, im Speziellen der Verzahnungsabschnitt, ist mit dem Betätigungshebel verbunden und gemeinsam mit diesem beweglich.

**In** weiterer Ausgestaltung der Erfindung wirkt die Arretiereinrichtung zwischen dem Stützhebel und dem feststehenden Halteelement. Diese Wirkung zwischen dem Stützhebel und der Arretiereinrichtung kann alternativ oder zusätzlich zu der vorhergehenden Ausgestaltung vorgesehen sein, bei der die Arretiereinrichtung zwischen dem Betätigungshebel und dem feststehenden Halteelement wirkt. Bei einer Ausgestaltung ist das erste Formschlusselement, im Speziellen die Zahnstange, fest mit dem feststehenden Halteelement verbunden und das zweite Formschlusselement, im Speziellen der Verzahnungsabschnitt, ist fest mit dem Stützhebel verbunden und gemeinsam mit diesem beweglich.

**In** weiterer Ausgestaltung der Erfindung weist die Spannvorrichtung eine Fixiereinrichtung auf, die bei Erreichen der Haltestellung die Bewegungskinematik des Kniehebelmechanismus lösbar fixiert. Die Fixiereinrichtung wirkt einer ungewollten Bewegung in Richtung der Öffnungsstellung entgegen. Zu diesem Zweck fixiert die Fixiereinrichtung die Bewegungskinematik des Kniehebelmechanismus in der Haltestellung. Die Fixiereinrichtung kann jede für diesen Zweck geeignete Gestaltung aufweisen. Bei einer Ausgestaltung ist die Fixiereinrichtung zum formschlüssigen Fixieren der Bewegungskinematik des Kniehebelmechanismus eingerichtet. Bei einer weiteren Ausgestaltung ist alternativ oder zusätzlich eine kraftschlüssige Fixierung vorgesehen.

**In** weiterer Ausgestaltung der Erfindung weist die Fixiereinrichtung einen Fixierhebel auf, der relativ zu dem Betätigungshebel um eine fünfte Schwenkachse in der Bewegungsebene schwenkbeweglich an dem Betätigungshebel gelagert ist und einen Rastabschnitt aufweist, der bei Erreichen der Haltestellung mit einem komplementären Rastabschnitt lösbar verrastet. Durch die Ausstattung der Fixiereinrichtung mit einem Fixierhebel samt Rastabschnitt wird ein besonders einfacher und robuster Aufbau der Fixiereinrichtung erreicht.

**In** weiterer Ausgestaltung der Erfindung ist der komplementäre Rastabschnitt durch die dritte Schwenkachse gebildet. Bei Erreichen der Haltestellung verrastet der Rastabschnitt lösbar mit der dritten Schwenkachse. Die dritte Schwenkachse weist bei dieser Ausgestaltung der Erfindung folglich eine vorteilhafte Doppelfunktion auf. Zum einen ist die dritte Schwenkachse Bestandteil des Kniehebelmechanismus. Zum anderen ist die dritte Schwenkachse gleichzeitig Bestandteil der Fixiereinrichtung.

Die Erfindung betrifft zudem einen Fahrradträger mit einer Trageinheit gemäß der vorhergehenden Offenbarung.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.

Es zeigen:
- Fig. 1: in schematischer Perspektivansicht eine Ausführungsform eines erfindungsgemäßen Fahrradträgers, der mit einer Ausführungsform einer erfindungsgemäßen Trageinheit versehen und zum Transport eines Fahrrads auf einem Dach eines Personenkraftwagens montiert ist,
- Fig. 2: in schematischer Perspektivansicht die Trageinheit des Fahrradträgers nach Fig. 1,
- Fig. 3 bis 8: schematische Längsschnitte der Trageinheit nach den Fig. 2 und 3, wobei eine Haltevorrichtung und eine Spannvorrichtung der Trageinheit unterschiedliche Stellungen zwischen einer geöffneten Öffnungsstellung (Fig. 3) und einer geschlossenen Haltestellung (Fig. 8) einnehmen.

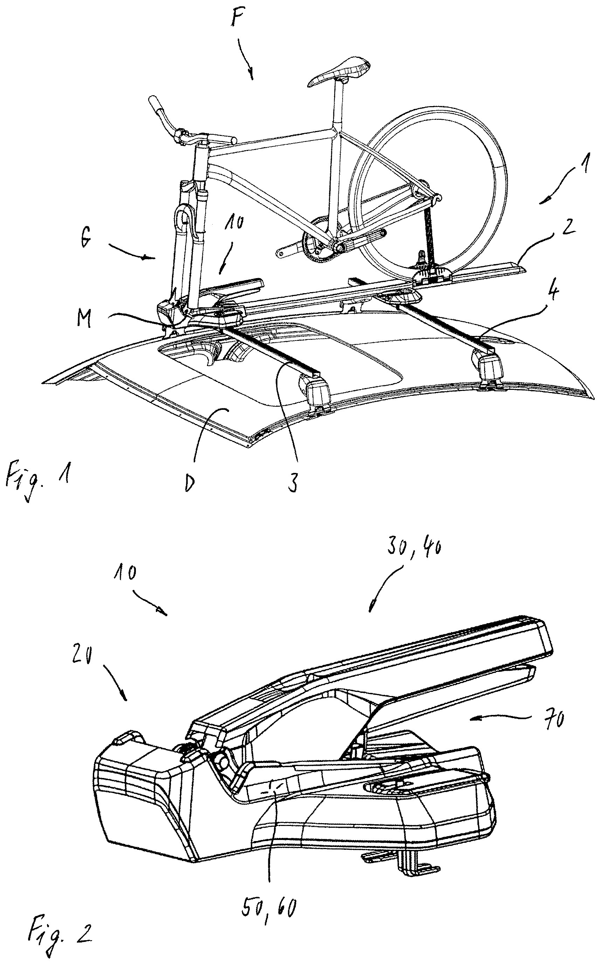

Gemäß Fig. 1 ist ein Fahrradträger 1 auf einem Fahrzeugdach D eines abschnittsweise gezeigten Personenkraftwagens (ohne Bezugszeichen) montiert. Der Fahrradträger 1 dient dem Tragen eines Fahrrads F. Folglich ist der Fahrradträger 1 vorliegend in Form eines Dachfahrradträgers gestaltet. Bei einer in den Figuren nicht gezeigten Ausführungsform ist der Fahrradträger als Heckfahrradträger ausgeführt.

Bei der gezeigten Ausführungsform weist der Fahrradträger 1 eine Tragschiene 2, einen vorderen Querträger 3 und einen hinteren Querträger 4 auf. Die beiden Querträger 3, 4 sind auf eine dem Fachmann bekannte Weise an dem Fahrzeugdach D befestigt. Vorliegend sind die beiden Querträger 3, 4 parallel zu einer Querachse des Fahrzeugdachs D ausgerichtet. Die Tragschiene 2 ist zwischen dem vorderen Querträger 3 und dem hinteren Querträger 4 längserstreckt und an dem vorderen Querträger 3 sowie an dem hinteren Querträger 4 befestigt. Die Tragschiene 2 ist vorliegend parallel zu einer Längsachse des Fahrzeugdachs D längserstreckt.

Bei der gezeigten Ausführungsform weist der Fahrradträger 1 eine einzige Tragschiene 2 auf. Bei in den Figuren nicht gezeigten Ausführungsformen sind mehrere parallel erstreckte Tragschienen vorhanden, so dass beispielsweise zwei oder drei Fahrradträger gleichzeitig gehalten und transportiert werden können.

Der Fahrradträger 1 weist zudem eine Trageinheit 10 auf. Die Trageinheit 10 dient einer lösbaren Befestigung des Fahrrads F an dem Fahrradträger 1.

Vorliegend ist die Trageinheit 10 in Richtung der Fahrzeugfront des Personenkraftwagens an der Tragschiene 2 angeordnet und mit derselben verbunden. Die Trageinheit 10 ist zum lösbaren Befestigen einer Fahrradgabel G des Fahrrads F eingerichtet. Bei einer in den Figuren nicht gezeigten Ausführungsform dient die Trageinheit stattdessen zur lösbaren Befestigung der hinteren Ausfallenden (ohne Bezugszeichen) des Fahrrads und ist zu diesem Zweck in Richtung des Fahrzeughecks des Personenkraftwagens an der Tragschiene angeordnet und fest mit dieser verbunden.

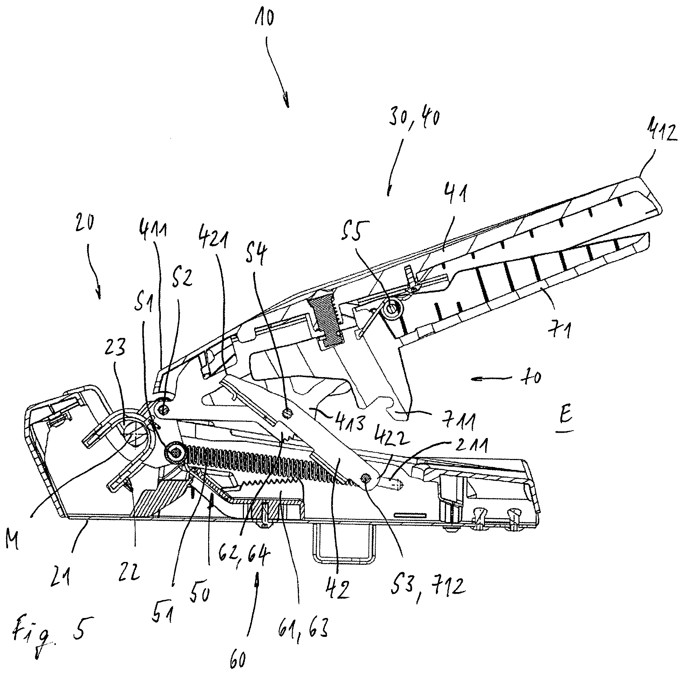

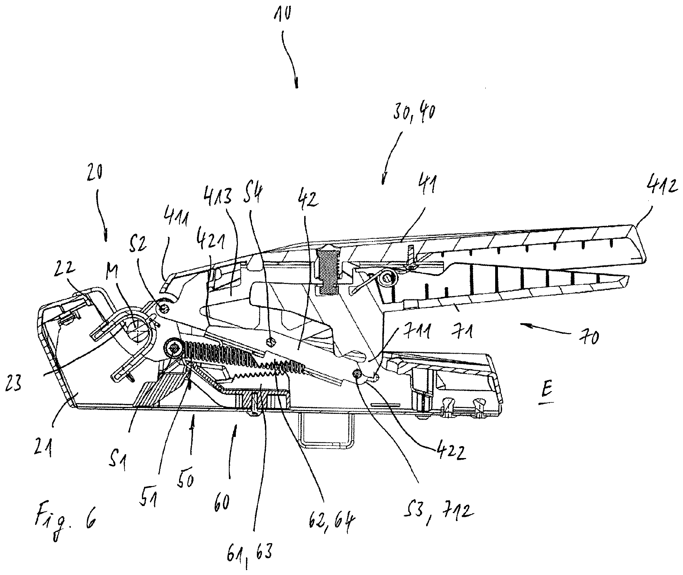

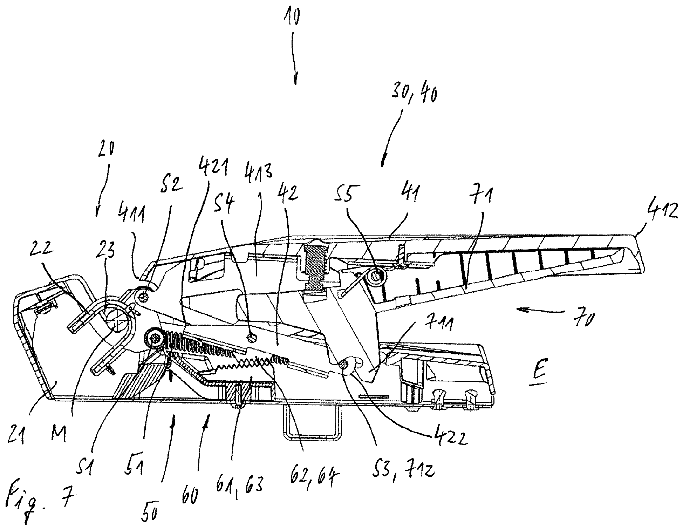

Die Trageinheit 10 ist im Detail in den Fig. 2 bis 8 gezeigt.

Die Trageinheit 10 weist eine Haltevorrichtung 20 und eine Spannvorrichtung 30 auf. Die Spannvorrichtung 30 weist einen Kniehebelmechanismus 40, eine Ausgleichseinrichtung 50 und eine Arretiereinrichtung 60 auf. Zudem weist die Spannvorrichtung 30 bei der gezeigten Ausführungsform eine optionale Fixiereinrichtung 70 auf. Diese ist aber nicht bei sämtlichen Ausführungsformen vorhanden.

Die Haltevorrichtung 20 ist dazu eingerichtet, einen an der Fahrradgabel G montierten Montageabschnitt M zu halten, bei dem es sich vorliegend um eine Steckachse handelt. Die Steckachse ist zwecks Transports des Fahrrads F anstelle eines Vorderrads an der Fahrradgabel G montiert.

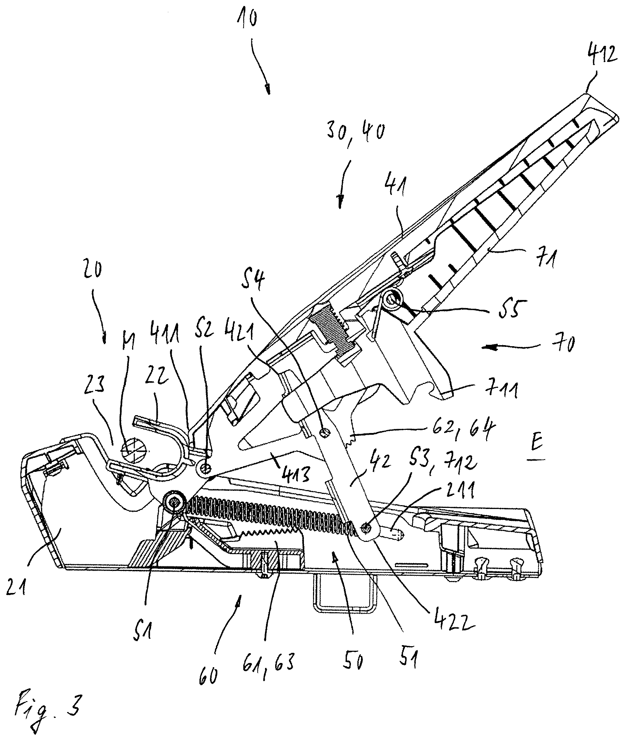

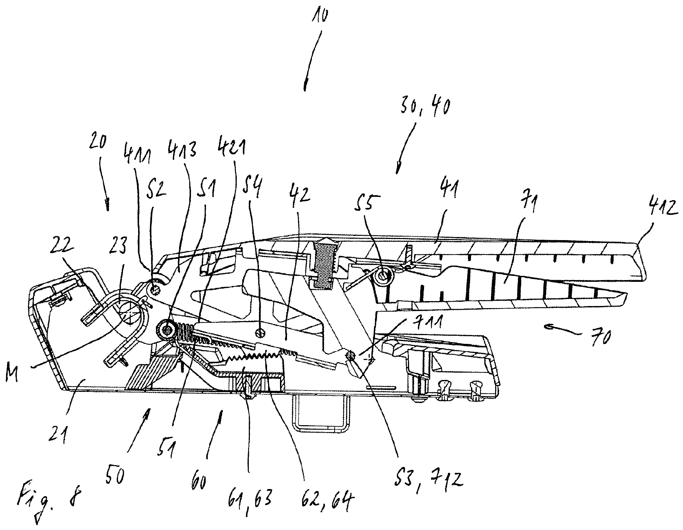

Die Haltevorrichtung 20 weist ein feststehendes Halteelement 21, ein bewegliches Halteelement 22 und eine Halteaussparung 23 auf. Die Halteaussparung ist zwischen dem feststehenden Halteelement 21 und dem beweglichen Halteelement 22 ausgebildet und dient der Aufnahme des besagten Montageabschnitts M (siehe Fig. 3 bis 8). Das bewegliche Halteelement 22 ist zum Öffnen und Schließen der Halteaussparung 23 relativ zu dem feststehenden Halteelement 21 beweglich. In geöffnetem Zustand der Halteaussparung 23 (Fig. 3) nimmt das bewegliche Halteelement 22 eine Öffnungsstellung ein und umgekehrt. In geschlossenem Zustand der Halteaussparung 23 (Fig. 8) nimmt das bewegliche Halteelement 22 eine Haltestellung ein und umgekehrt.

Der Kniehebelmechanismus 40 der Spannvorrichtung 30 ist dazu eingerichtet, das bewegliche Halteelement 22 zwischen der Öffnungsstellung und der Haltestellung zu bewegen und in der Haltestellung zu verriegeln. Der Kniehebelmechanismus 40 ist in einer Bewegungsebene E beweglich. Die Bewegung des beweglichen Halteelements 22 findet vorliegend ebenfalls in der Bewegungsebene E statt.

Bei der gezeigten Ausführungsform ist das bewegliche Halteelement 22 relativ zu dem feststehenden Halteelement 21 um eine erste Schwenkachse S1 zwischen der Öffnungsstellung und der Haltestellung schwenkbeweglich. Die erste Schwenkachse S1 ist orthogonal zu der Bewegungsebene E. Das bewegliche Halteelement 22 ist mittels der ersten Schwenkachse S1 an dem feststehenden Halteelement 21 gelagert. Diese Lagerung ist vorliegend unmittelbar. Bei einer in den Figuren nicht gezeigten Ausführungsform ist das bewegliche Halteelement an einem fest mit dem feststehenden Halteelement verbundenen Bauteil und/oder Abschnitt gelagert, so dass in diesem Fall von einer indirekten Lagerung des beweglichen Halteelements an dem feststehenden Halteelement gesprochen werden kann.

Bei der gezeigten Ausführungsform ist das bewegliche Halteelement 22 mittels des Kniehebelmechanismus 40 um in etwa 90° in der Bewegungsebene E schwenkbeweglich.

Bei der gezeigten Ausführungsform weist der Kniehebelmechanismus 40 einen Betätigungshebel 41 und einen Stützhebel 42 auf.

Der Betätigungshebel 41 ist um eine zweite Schwenkachse S2 relativ zu dem beweglichen Halteelement 22 schwenkbeweglich an demselben gelagert.

Der Stützhebel 42 ist um eine dritte Schwenkachse S3 relativ zu dem feststehenden Halteelement 21 schwenkbeweglich mit dem feststehenden Halteelement 21 verbunden, wobei diese Verbindung mittelbar oder unmittelbar sein kann. Vorliegend ist eine unmittelbare Verbindung vorgesehen.

Der Betätigungshebel 41 und der Stützhebel 42 sind um eine vierte Schwenkachse S4 relativ zueinander schwenkbeweglich aneinander gelagert.

Die zweite Schwenkachse S2, die dritte Schwenkachse S3 und die vierte Schwenkachse S4 sind zueinander parallel und orthogonal zu der Bewegungsebene E.

Bei der gezeigten Ausführungsform ist die zweite Schwenkachse S2 einends des Betätigungshebels 41 angeordnet. Die dritte Schwenkachse S3 ist einends des Stützhebels 42 angeordnet. Die vierte Schwenkachse S4 ist andernends des Stützhebels 42 angeordnet. In Bezug auf eine nicht näher bezeichnete Längsachse des Betätigungshebels 41 ist die vierte Schwenkachse S4 von der zweiten Schwenkachse S2 beabstandet.

Bei der gezeigten Ausführungsform ist der Betätigungshebel 41 zwischen einem ersten Ende 411 und einem zweiten Ende 412 längserstreckt. Der Betätigungshebel 41 ist vorliegend im Wesentlichen gerade längserstreckt. Das erste Ende 411 ist der Haltevorrichtung 20 zugewandt und mittels der zweiten Schwenkachse S2 schwenkbeweglich an dem beweglichen Halteelement 22 gelagert. Die zweite Schwenkachse S2 ist im Bereich des ersten Endes 411 an dem Betätigungshebel 41 angeordnet. Das zweite Ende 412 ist der Haltevorrichtung 20 abgewandt.

Bei der gezeigten Ausführungsform ist der Stützhebel 42 zwischen einem ersten Ende 421 und einem zweiten Ende 422 längserstreckt. Vorliegend ist das erste Ende 421 der Haltevorrichtung 20 zugewandt und das zweite Ende 422 ist der Haltevorrichtung 20 abgewandt, sofern die Haltestellung eingenommen ist (siehe Fig. 8). Die vierte Schwenkachse S4 ist im Bereich des ersten Endes 421 an dem Stützhebel 42 angeordnet. Das erste Ende 421 ist mittels der vierten Schwenkachse S4 schwenkbeweglich an dem Betätigungshebel 41 gelagert. Dabei liegt die vierte Schwenkachse S4 in Bezug auf den Betätigungshebel 41 zwischen dessen erstem Ende 411 und dessen zweitem Ende 412. Die dritte Schwenkachse S3 ist im Bereich des zweiten Endes 422 an dem Stützhebel 42 angeordnet. Das zweite Ende 422 des Stützhebels 42 ist mittels der dritten Schwenkachse S3 mit dem feststehenden Halteelement 21 schwenkbeweglich (mittelbar oder unmittelbar) verbunden.

Um die Halteaussparung 23 von der Öffnungsstellung (Fig. 3) in die Haltestellung (Fig. 8) zu verlagern, wird der Betätigungshebel 41 ausgehend von der in Fig. 3 gezeigten Konfiguration im Uhrzeigersinn um die zweite Schwenkachse (S2) verlagert. Vorliegend ragt der Betätigungshebel 41 in der Öffnungsstellung überwiegend vertikal nach oben. Entsprechendes gilt für den Stützhebel 42. Bei einer solchen Bewegung des Betätigungshebels 41 im Uhrzeigersinn um die zweite Schwenkachse S2 bewegt sich der Stützhebel 42 entgegen dem Uhrzeigersinn um die dritte Schwenkachse S3. **In** Bezug auf die vierte Schwenkachse S4 bewegt sich der Betätigungshebel 41 im Uhrzeigersinn, der Stützhebel 42 entgegen dem Uhrzeigersinn. Bei einer solchen Bewegung wird gleichzeitig das bewegliche Halteelement 22 entgegen dem Uhrzeigersinn um die erste Schwenkachse S1 verschwenkt. **In** der Haltestellung (Fig. 8) sind der Betätigungshebel 41 und der Stützhebel 42 überwiegend horizontal ausgerichtet.

Zum Öffnen der Halteaussparung 23 ausgehend von der Haltstellung (Fig. 8) erfolgt die Bewegung des Kniehebelmechanismus 40 in einer kinematisch umgekehrten Weise.

**In** der Haltestellung (Fig. 8) ist der Kniehebelmechanismus 40 überstreckt. Die Überstreckung bewirkt eine Verriegelung der Haltevorrichtung 20 in der Haltestellung. Überstreckt meint, dass der Kniehebelmechanismus 40 ausgehend von der Öffnungsstellung in Richtung der Haltestellung über einen Totpunkt hinwegbewegt ist. Als Totpunkt kann diejenige Konfiguration des Kniehebelmechanismus 40 verstanden werden, in welcher eine weitergehende Bewegung des Betätigungshebels 40 in Richtung der Haltestellung keine weitergehende Bewegung des beweglichen Halteelements 22 in Richtung der Haltestellung bewirkt. Bei der gezeigten Ausführungsform ist der Totpunkt dann erreicht, wenn die zweite Schwenkachse S2, die dritte Schwenkachse S3 und die vierte Schwenkachse S4 innerhalb der Bewegungsebene E auf einer Geraden liegen. Sobald die vierte Schwenkachse S4 in Richtung der Haltestellung über die gedachte Verbindungsgerade zwischen der zweiten Schwenkachse S2 und der dritten Schwenkachse S3 hinwegbewegt wird, erfolgt eine Überstreckung des Kniehebelmechanismus 40.

Beim Öffnen und Schließen der Halteaussparung 23 verbleibt die erste Schwenkachse S1 innerhalb der Bewegungsebene E stets ortsfest. Die zweite Schwenkachse S2 und die vierte Schwenkachse S4 sind dabei innerhalb der Bewegungsebene E verlagerbar. Die zweite Schwenkachse S2 bewegt sich auf einer kreisbogenförmigen Bewegungsbahn um die erste Schwenkachse S1. Die vierte Schwenkachse S4 bewegt sich auf einer kreisbogenförmigen Bewegungsbahn um die dritte Schwenkachse S3.

Die eigentliche Bewegungskinematik des Kniehebelmechanismus 40 erfordert keine grundsätzlich Beweglichkeit der dritten Schwenkachse S3 in Bezug auf die Bewegungsebene. Allerdings ist vorliegend eine elastische Abstützung der dritten Schwenkachse S3 mittels der Ausgleichseinrichtung 50 vorgesehen.

Die Ausgleichseinrichtung 50 ermöglicht eine elastisch abgestützte translatorische Bewegung der dritten Schwenkachse S3 innerhalb der Bewegungsebene E. Durch die Ausgleichseinrichtung 50 ist der Kniehebelmechanismus 40 relativ zu dem feststehenden Halteelement 21 in der Bewegungsebene E begrenzt translatorisch beweglich elastisch abgestützt. Diese elastische Abstützung bewirkt einen Größenausgleich, der ein Verriegeln des beweglichen Halteelements 22 beim Halten unterschiedlich großer Montageabschnitte in unterschiedlich weit geschlossenen Haltestellungen ermöglicht. Mit anderen Worten: Die Ausgleichseinrichtung 50 erlaubt es, dass auch unterschiedlich dicke Steckachsen zuverlässig verriegelt werden können, wobei unabhängig von den Durchmesserunterschieden stets eine zuverlässige Verriegelung und funktionsgerechte Bewegungskinematik des Kniehebelmechanismus 40 gewährleistet ist. Im Speziellen ist gewährleistet, dass der Kniehebelmechanismus 40 in der Haltestellung stets überstreckt ist.

Bei der gezeigten Ausführungsform weist die Ausgleichseinrichtung 50 wenigstens eine Ausgleichsfeder 51 auf. Die Ausgleichsfeder 51 greift einends an dem Kniehebelmechanismus 40 an und ist andernends relativ zu dem feststehenden Halteelement 21 fest abgestützt. Die Ausgleichsfeder 51 ist in der Bewegungsebene E elastisch. Vorliegend greift die Ausgleichsfeder 51 einends an der dritten Schwenkachse S3 und damit am zweiten Ende des Stützhebels 42 an.

Bei der gezeigten Ausführungsform ist die Ausgleichsfeder 51 eine Wendelfeder. In der Haltestellung sind der Stützhebel 42 und die Ausgleichsfeder 51 im Wesentlichen parallel längserstreckt.

Die elastische Abstützung mittels der Ausgleichseinrichtung 50 ermöglicht eine translatorische Ausgleichsbewegung der dritten Schwenkachse S3 innerhalb der Bewegungsebene E. Zwecks Führung der besagten Ausgleichsbewegung ist die dritte Schwenkachse S3 bei der gezeigten Ausführungsform an einer Führungsnut 211 (Fig. 3, 4, 5) geführt. Die Führungsnut 211 ist vorliegend an dem feststehenden Halteelement 21 ausgebildet und überwiegend horizontal längserstreckt.

Die Arretiereinrichtung 60 ist dazu eingerichtet, die Ausgleichseinrichtung 50 und damit die elastische Abstützung des Kniehebelmechanismus 40 bei Erreichen der Haltestellung lösbar zu arretieren.

Durch diese lösbare Arretierung wird einer ungewollten Verlagerung der dritten Schwenkachse S3 aus der Haltestellung (Fig. 8) in Richtung der Öffnungsstellung (Fig. 3) entgegengewirkt. Eine solche ungewollte Verlagerung kann beispielsweise durch beschleunigungsbedingte Trägheitskräfte verursacht werden, wie sie beispielsweise bei einem Unfall des Personenkraftwagens auftreten können.

Bei der gezeigten Ausführungsform weist die Arretiereinrichtung 60 ein erstes Formschlusselement 61 und ein zweites Formschlusselement 62 auf.

Bei der gezeigten Ausführungsform sind das erste Formschlusselement 61 und das zweite Formschlusselement 62 jeweils aus Metall gefertigt.

Das erste Formschlusselement 61 ist relativ zu dem feststehenden Halteelement 21 unbeweglich. Das zweite Formschlusselement 62 ist mit dem Kniehebelmechanismus 40 fest verbunden und gemeinsam mit diesem in der Bewegungsebene E beweglich. Bei Erreichen der Haltestellung wirkt das zweite Formschlusselement 62 in Richtung der elastischen Abstützung der Ausgleichseinrichtung 50 lösbar formschlüssig mit dem ersten Formschlusselement 61 zusammen (Fig. 8).

Bei der gezeigten Ausführungsform weist das erste Formschlusselement 61 eine Zahnstange 63 auf. Die Zahnstange 63 ist in der Bewegungsebene E längserstreckt. Vorliegend ist die Zahnstange 63 in etwa parallel zu der Ausgleichsfeder 51 und/oder dem Stützhebel 42 längserstreckt, sofern die Haltestellung eingenommen ist (Fig. 8).

Das zweite Formschlusselement 62 weist einen Verzahnungsabschnitt 64 auf. Der Verzahnungsabschnitt 64 gelangt bei Erreichen der Haltestellung in Zahneingriff mit der Zahnstange 63. Beim Halten unterschiedlich großer Montageabschnitte findet der besagte Zahneingriff an unterschiedlichen Längspositionen der Zahnstange 63 statt. Mit anderen Worten: Je weiter die dritte Schwenkachse S3 in der Zeichenebene der Fig. 8 nach rechts elastisch verlagert ist, desto weiter wandert der Zahneingriff entlang der Zahnstange 63 nach rechts. Entsprechendes gilt kinematisch umgekehrt. Mit nochmals anderen Worten: Je dicker die zu haltende Steckachse, desto weiter wandert der Zahneingriff in der Haltestellung entlang der Zahnstange 63 nach rechts. Je dünner die Steckachse ist, desto weiter wandert der Zahneingriff entlang der Zahnstange 63 nach links.

Bei der gezeigten Ausführungsform ist die Zahnstange 63 auf nicht näher gezeigte Weise fest mit dem feststehenden Halteelement 21 zusammengefügt.

Bei der gezeigten Ausführungsform ist der Verzahnungsabschnitt 64 ein Abschnitt eines Metallbauteils 413. Vorliegend dient das Metallbauteil 413 zudem als Versteifung des Betätigungshebels 41, der bei der gezeigten Ausführungsform aus Kunststoff gefertigt ist. Das Metallbauteil 413 und damit auch der Verzahnungsabschnitt 64 sind vorliegend fest mit dem Betätigungshebel 41 zusammengefügt und gemeinsam mit diesem innerhalb der Bewegungsebene E beweglich. Dabei ist der Verzahnungsabschnitt 64 vorliegend im Bereich der vierten Schwenkachse S4 positioniert. Das Metallbauteil 413 kann auch als Abschnitt und/oder Komponente des Betätigungshebels 41 ausgefasst werden.

Die Arretiereinrichtung 60 dient allein der Arretierung der Ausgleichseinrichtung 50 und damit der Arretierung der elastischen Abstützung des Kniehebelmechanismus 40. Die eigentliche Bewegungskinematik des Kniehebelmechanismus 40 in der Bewegungsebene E ist mittels der Arretiereinrichtung 60 nicht arretierbar. Für diesen Zweck ist die optionale Fixiereinrichtung 70 vorhanden.

Die Fixiereinrichtung 70 fixiert die Bewegungskinematik des Kniehebelmechanismus 40 bei Erreichen der Haltestellung (Fig. 8). Diese Fixierung ist lösbar.

Bei der gezeigten Ausführungsform weist die Fixiereinrichtung 70 einen Fixierhebel 71 auf, der relativ zu dem Betätigungshebel 41 um eine fünfte Schwenkachse S5 in der Bewegungsebene E schwenkbeweglich an dem Betätigungshebel 41 und/oder dem Metallbauteil 413 gelagert ist. Der Fixierhebel 71 weist einen Rastabschnitt 711 auf, der bei Erreichen der Haltestellung mit einem komplementären Rastabschnitt 712 lösbar verrastet.

Bei der gezeigten Ausführungsform ist der komplementäre Rastabschnitt 712 durch die dritte Schwenkachse S3 gebildet. Die dritte Schwenkachse S3 weist folglich eine vorteilhafte Doppelfunktion auf. Sie bildet zum einen eine Komponente des Kniehebelmechanismus 40 und zum anderen gleichzeitig eine Komponente der Fixiereinrichtung 70.

Beim Annähern an die Haltestellung überrastet der Rastabschnitt 711 selbsttätig die dritte Schwenkachse S3. Bei diesem Überrasten verschwenkt der Fixierhebel 71 um die fünfte Schwenkachse S5. Dabei ist der Fixierhebel 71 mittels einer Schenkelfeder (ohne Bezugszeichen) im Uhrzeigersinn um die fünfte Schwenkachse S5 vorgespannt. Zum Lösen der Fixiereinrichtung 70 kann der Benutzer den Fixierhebel 71 ausgehend von der in Fig. 8 gezeigten Konfiguration relativ zu dem Betätigungshebel 41 um die fünfte Schwenkachse S5 entgegen dem Uhrzeigersinn betätigen. Hierdurch wird der Rastabschnitt 41 von der Schwenkachse S3 und damit dem komplementären Rastabschnitt 712 gelöst. Nach Lösen der Fixierung kann der Betätigungshebel 41 zum Öffnen der Halteaussparung 23 bewegt werden.

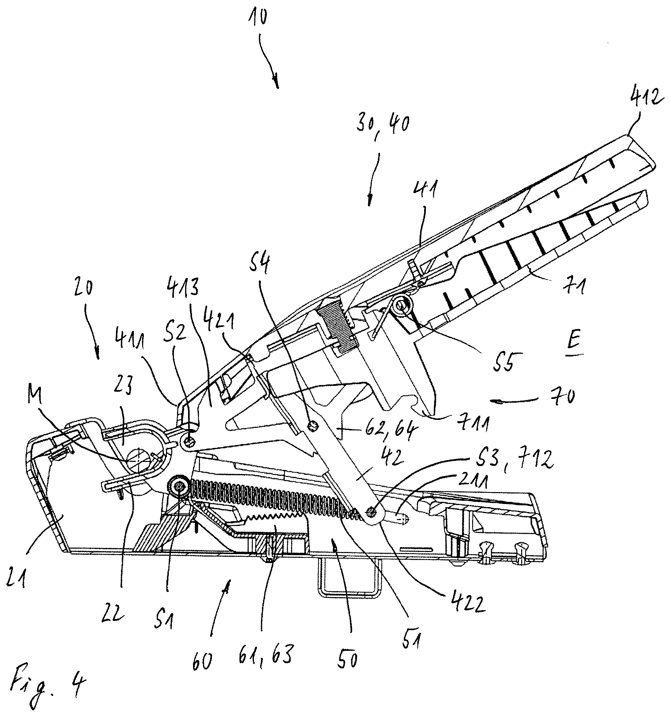

Bei der gezeigten Ausführungsform ist eine weitere definierte Stellung zwischen der Öffnungsstellung und der Haltestellung vorgesehen. Diese definierte Stellung wird als Ruhestellung bezeichnet und ist in Fig. 4 gezeigt. Dabei ist das bewegliche Halteelement 22 ausgehend von der Öffnungsstellung (Fig. 3) in die Ruhestellung beweglich. In der Ruhestellung ist die Halteaufnahme 23 wenigstens teilweise und/oder weniger weit als in der Haltestellung (Fig. 8) geschlossen.

Die Ruhestellung kann alternativ auch als Vorfixierstellung bezeichnet werden und dient einer vorübergehenden, sicheren Vorfixierung des zu befestigenden Fahrrads F. In der Ruhestellung ist der Montageabschnitt M sicher in der Haltevorrichtung 20 gehalten, wobei die Ruhestellung aber nicht einer dauerhaften Befestigung und Verwendung im Fahrbetrieb des Personenkraftwagens dient (keine Transportbefestigung). Die Ruhestellung erlaubt einen vereinfachten und besonders sicheren Befestigungsvorgang, da der Montageabschnitt M bereits vor Erreichen der Haltestellung vorfixiert wird. Durch diese Vorfixierung wird vermieden, dass das Fahrrad F, beispielsweise durch eine Unachtsamkeit des Bedieners, während der Befestigung noch vor Erreichen der Haltestellung umkippt und Schäden oder Verletzungen verursachen kann.

Bei der gezeigten Ausführungsform ist das bewegliche Halteelement 22 unter Einwirkung der Gewichtskraft der zu haltenden Fahrradgabel G ausgehend von der Öffnungsstellung in die Ruhestellung verlagerbar. Eine zusätzliche Einwirkung durch den Bediener ist nicht erforderlich, um eine Verlagerung in die Ruhestellung zu bewirken. Ausreichend ist allein die Einwirkung der Fahrradgabel G auf das bewegliche Halteelement 22. Unter Einwirkung der Gewichtskraft der Fahrradgabel G kann das bewegliche Halteelement 22 ausgehend von der Öffnungsstellung mittels des Montageabschnitts M entgegen dem Uhrzeigersinn um die erste Schwenkachse S1 in die Ruhestellung verschwenkt werden.

Die Halteaufnahme 23 ist bei der gezeigten Ausführungsform zwischen dem beweglichen Halteelement 22 und dem feststehenden Halteelement 21 ausgebildet. Um in der Öffnungsstellung eine ausreichende Kraftübertragung von dem Montageabschnitt M auf das bewegliche Halteelement 22 zu ermöglichen, weist letzteres bei der gezeigten Ausführungsform eine Aufnahmeaussparung auf (ohne Bezugszeichen). Die Aufnahmeaussparung ist im Querschnitt rinnenförmig und umgreift den Montageabschnitt M in Umfangsrichtung. In der Öffnungsstellung ist die Aufnahmeaussparung horizontal nach vorne und vertikal nach oben ausgerichtet, so dass der Montageabschnitt von vorne nach hinten und von oben nach unten in die Aufnahmeaussparung des beweglichen Halteelements 22 eingesetzt werden kann. Die Aufnahmeaussparung gewährleistet, dass die Gewichtskraft der Fahrradgabel G das bewegliche Halteelement 22 um die erste Schwenkachse S1 in Richtung der Ruhestellung bewegen kann. Dabei liegt ein Kraftangriffspunkt der Gewichtskraft innerhalb der Aufnahmeaussparung um einen horizontalen Hebelarm beabstandet von der ersten Schwenkachse S1. Dieser Hebelarm bewirkt, dass das bewegliche Halteelement 22 unter Einwirkung der Gewichtskraft der Fahrradgabel G entgegen dem Uhrzeigersinn um die erste Schwenkachse S1 gedrückt wird.

## Patentansprüche

1. Trageinheit (10) für einen Fahrradträger (1), aufweisend
eine Haltevorrichtung (20) zum Halten eines an einer Fahrradgabel (G) montierten Montageabschnitts (M), insbesondere einer Steckachse, wobei die Haltevorrichtung (20) ein feststehendes Halteelement (21), ein bewegliches Halteelement (22) und eine Halteaussparung (23) aufweist, die zwischen dem feststehenden Halteelement (21) und dem beweglichen Halteelement (22) ausgebildet ist, wobei das bewegliche Halteelement (22) relativ zu dem feststehenden Halteelement (21) beweglich ist zwischen einer Öffnungsstellung, in der die Halteaussparung (23) zur Aufnahme des Montageabschnitts (M) geöffnet ist, und einer Haltestellung, in der die Halteaussparung (23) zum Halten des Montageabschnitts (M) geschlossen ist,
eine Spannvorrichtung (30) mit einem Kniehebelmechanismus (40), der mit dem beweglichen Halteelement (22) wirkverbunden, in einer Bewegungsebene (E) beweglich und zum Bewegen des beweglichen Halteelements (22) zwischen der Öffnungsstellung und der Haltestellung eingerichtet ist, wobei der Kniehebelmechanismus (40) in der Haltestellung überstreckt ist zum Verriegeln des beweglichen Halteelements (22),
wobei die Spannvorrichtung (30) eine Ausgleichseinrichtung (50) aufweist, mittels derer der Kniehebelmechanismus (40) relativ zu dem feststehenden Halteelement (21) in der Bewegungsebene (E) translatorisch beweglich elastisch abgestützt ist, wobei die elastische Abstützung einen Größenausgleich bewirkt, der ein Verriegeln des beweglichen Halteelements (22) beim Halten unterschiedlich großer Montageabschnitte erlaubt,
**dadurch gekennzeichnet, dass** die Spannvorrichtung (30) eine Arretiereinrichtung (60) aufweist, die dazu eingerichtet ist, die Ausgleichseinrichtung (50) und damit die elastische Abstützung des Kniehebelmechanismus (40) bei Erreichen der Haltestellung lösbar zu arretieren.

2. Trageinheit (10) nach Anspruch 1, wobei die Arretiereinrichtung (60) ein erstes Formschlusselement (61) und ein zweites Formschlusselement (62) aufweist, wobei das erste Formschlusselement (61) relativ zu dem feststehenden Halteelement (21) unbeweglich ist, wobei das zweite Formschlusselement (62) mit dem Kniehebelmechanismus (40) fest verbunden und gemeinsam mit diesem in der Bewegungsebene (E) beweglich ist, und wobei das zweite Formschlusselement (62) bei Erreichen der Haltestellung mit dem ersten Formschlusselement (61) in Richtung der elastischen Abstützung formschlüssig zusammenwirkt.

3. Trageinheit (1) nach Anspruch 2, wobei das erste Formschlusselement (61) eine Zahnstange (63) aufweist, die in der Bewegungsebene (E) längserstreckt ist, wobei das zweite Formschlusselement (62) einen Verzahnungsabschnitt (64) aufweist, der bei Erreichen der Haltestellung in Zahneingriff mit der Zahnstange (63) gelangt, und wobei der Zahneingriff beim Halten unterschiedlich großer Montageabschnitte an unterschiedlichen Längspositionen der Zahnstange (63) stattfindet.

4. Trageinheit (10) nach einem der vorhergehenden Ansprüche, wobei das bewegliche Halteelement (22) relativ zu dem feststehenden Halteelement (21) um eine erste Schwenkachse (S1) in der Bewegungsebene (E) zwischen der Öffnungsstellung und der Haltestellung schwenkbeweglich an dem feststehenden Halteelement (21) gelagert ist.

5. Trageinheit (10) nach einem der vorhergehenden Ansprüche, wobei der Kniehebelmechanismus (40) einen Betätigungshebel (41) und einen Stützhebel (42) aufweist, wobei der Betätigungshebel (41) relativ zu dem beweglichen Halteelement (22) um eine zweite Schwenkachse (S2) in der Bewegungsebene (E) schwenkbeweglich an dem beweglichen Halteelement (22) gelagert ist, wobei der Stützhebel (42) um eine dritte Schwenkachse (S3) relativ zu dem feststehenden Halteelement (21) schwenkbeweglich mit dem feststehenden Halteelement (21) verbunden ist, und wobei der Betätigungshebel (41) und der Stützhebel (42) um eine vierte Schwenkachse (S4) relativ zueinander in der Bewegungsebene (E) schwenkbeweglich aneinander gelagert sind.

6. Trageinheit (10) nach Anspruch 5, wobei die dritte Schwenkachse (S3) mittels der Ausgleichseinrichtung (50) relativ zu dem feststehenden Halteelement (21) in der Bewegungsebene (E) translatorisch beweglich elastisch abgestützt ist.

7. Trageinheit (10) nach Anspruch 5 oder 6, wobei die Arretiereinrichtung (60) zwischen dem Betätigungshebel (41) und dem feststehenden Halteelement (21) wirkt.

8. Trageinheit (10) nach einem der Ansprüche 5 bis 7, wobei die Arretiereinrichtung (60) zwischen dem Stützhebel (42) und dem feststehenden Halteelement (21) wirkt.

9. Trageinheit (10) nach einem der vorhergehenden Ansprüche, wobei die Spannvorrichtung (30) eine Fixiereinrichtung (70) aufweist, die bei Erreichen der Haltestellung die Bewegungskinematik des Kniehebelmechanismus (40) lösbar fixiert.

10. Trageinheit (10) nach Anspruch 9 in Kombination mit einem der Ansprüche 5 bis 8, wobei die Fixiereinrichtung (70) einen Fixierhebel (71) aufweist, der relativ zu dem Betätigungshebel (41) um eine fünfte Schwenkachse (S5) in der Bewegungsebene (E) schwenkbeweglich an dem Betätigungshebel (41) gelagert ist und einen Rastabschnitt (711) aufweist, der bei Erreichen der Haltestellung mit einem komplementären Rastabschnitt (712) lösbar verrastet.

11. Trageinheit (10) nach Anspruch 10, wobei der komplementäre Rastabschnitt (712) durch die dritte Schwenkachse (S3) gebildet ist.

12. Fahrradträger (1) mit einer Trageinheit (10) nach einem der vorhergehenden Ansprüche.
